# EUROPEAN PATENT SPECIFICATION

(11) **EP 4 052 982 B1**
(45) Date of publication and mention of the grant of the patent: **16.08.2023**
(21) Application number: 21215306.8
(22) Date of filing: 16.12.2021
(51) Int. Cl.: B60W 50/00, B60W 30/14, B60W 30/18, B60W 30/09, B60K 28/10, B60W 30/12, B60K 28/06

(54) **DRIVING CONTROL APPARATUS FOR VEHICLE**
ANTRIEBSSTEUERUNGSVORRICHTUNG FÜR FAHRZEUG
APPAREIL DE COMMANDE D'ENTRAÎNEMENT POUR VÉHICULE

(30) Priority: 03.03.2021 JP 2021033719
(43) Date of publication of application: 07.09.2022
(73) Proprietor: Suzuki Motor Corporation, Shizuoka 432-8611 (JP)
(72) Inventor: Sato, Katsuhiko, Hamamatsu-shi, 432-8611 (JP)
(74) Representative: Henkel & Partner mbB

(56) References cited:
- US-A1- 2020 207 348
- US-A1- 2020 307 582

## Description

### [Technical Field]

The present invention relates to driving control apparatuses for vehicles, and more particularly, relates to an emergency avoidance function and a risk minimization function during operation of an automated lane keeping system.

### [Background Art]

Various driving control systems are being put into practical use and internationally standardized for purposes of reducing the burden on drivers and supporting safe driving. For example, driving control systems, such as an inter-vehicle distance control system (ACCS) and a lane keeping assistance system (LKAS) that have already been put into practical use, and a "partially automated in-lane driving system (PADS)" that is a combination of these, are in the process of being put into practical use. Among these, regulations of an "automated lane keeping system (ALKS)" related to automated driving in a single lane under specific conditions, such as a motor highway with a speed limit of 60 km/h or less and a physical separation zone separating from an oncoming lane, are being developed by the United Nations.

In such a driving control system, when failure occurs in the system or when a driving condition of the vehicle deviates from a system limit, the driver is notified of an operation takeover request, and operation shifts to manual driving by the driver, but when the driver cannot take over operation due to the driver's drowsiness, distraction, illness, or the like, the operation shifts to risk minimization control (MRM: Minimal Risk Maneuver), such as emergency evacuation. When a collision with another vehicle is predicted, emergency avoidance control (EM: Emergency Maneuver), such as emergency braking (AEB: Autonomous Emergency Braking), is activated.

For example, Patent Literature 1 discloses a driving assistance apparatus that selectively performs a post-request change function that requests the driver to change driving and performs a change of driving after the elapse of a certain period of time and an automatic stop function that immediately starts stopping the vehicle without requesting a change of driving, according to the state of the driver detected by a driver status monitor, when an unplanned driving change is made due to a malfunction, deterioration in accuracy, or the like of peripheral monitoring sensors used for automated driving.

### [Citation List]

### [Patent Literature]

[Patent Literature 1] JP 2018-180594 A
[Patent Literature 2] US 2020/307582 A1
[Patent Literature 3] US 2020/207348 A1

### [Summary of Invention]

### [Problem to be Solved by the Invention]

However, even while the minimal risk maneuver or emergency maneuver is activated, override is possible by the driver's manual operation, so there is a risk of behavior of the vehicle becoming unstable or suddenly approaching other vehicles or surrounding structures due to excessive override of the driver who is agitated by an immediate stop or sudden deceleration due to that.

The present invention has been made in view of the above-described situation, and an object is to control excessive override during activation of minimal risk maneuver or emergency maneuver, and allow the minimal risk maneuver and emergency maneuver to be performed smoothly.

### [Means for Solving the Problems]

In order to solve the above-described problems, the present invention is
a driving control apparatus for a vehicle, including:
an environmental condition estimating part including a surrounding recognition function for recognizing a vehicle's driving lane, neighboring lanes, other vehicles driving in the driving lanes, and surrounding environments and a function for obtaining the vehicle's moving state;
a path generating part for generating a target path on the basis of information obtained by the environmental condition estimating part; and
a vehicle control part configured to perform speed control and steering control for making the vehicle follow the target path, the driving control apparatus for a vehicle being characterized by having:
   a function for performing automated in-lane driving by maintaining a set vehicle speed when there is no preceding other vehicle in the vehicle's driving lane, and maintaining a set inter-vehicle distance when there is a preceding other vehicle;
   a function for performing automated lane change to a neighboring lane when there is no other vehicle in a predetermined area of the neighboring lane;
   an MRM function for performing minimal risk maneuver including evacuating the vehicle to a road shoulder or stopping the vehicle in the lane when a system failure occurs during operation of the automated in-lane driving function or the automated lane change function or operation is not taken over by a driver when a system failure occurs;
   an EM function for performing emergency maneuver including operation of an emergency braking when a collision with another vehicle is predicted due to cut in of the other vehicle into the target path; and
   an override function for stopping an operating function and transferring authority to the driver when there is an operation intervention equal to or greater than a predetermined threshold value by the driver during operation of the automated in-lane driving function, the automated lane change function, the MRM function, or the EM function,
   wherein as the predetermined threshold value, the override function is configured to be set to a first threshold value during operation of the automated in-lane driving function or the automated lane change function, to a second threshold value at activation of the MRM function, and to a third threshold value at activation of the EM function, wherein the third threshold value is equal to or greater than the second threshold value, and the second threshold value is greater than the first threshold value.

### [Advantageous Effects of Invention]

In the driving control apparatus for a vehicle according to the present invention, as described above, since the override threshold value is set according to the operation state of the automated driving function, even when a large amount of operation that would make the behavior of the vehicle unstable if the threshold value were a threshold value during normal time is given by an excessive operation intervention of the driver who is agitated by activation of emergency maneuver or minimal risk maneuver, the emergency maneuver or minimal risk maneuver is continued, and a situation of the behavior of the vehicle becoming unstable or suddenly approaching other vehicles or surrounding structures can be avoided.

### [Brief Description of Drawings]

[Figure 1] Figure 1 is a schematic view showing a driving control system of a vehicle.
[Figure 2] Figure 2 is a schematic plan view showing an external sensor group of the vehicle.
[Figure 3] Figure 3 is a block diagram showing the driving control system of the vehicle.
[Figure 4] Figure 4 is a state transition diagram of control in the driving control system.
[Figure 5] Figure 5 is a flowchart showing control of an embodiment of the present invention.

### [Mode for Carrying Out the Invention]

Hereinafter, an embodiment of the present invention will be described in detail with reference to the drawings.

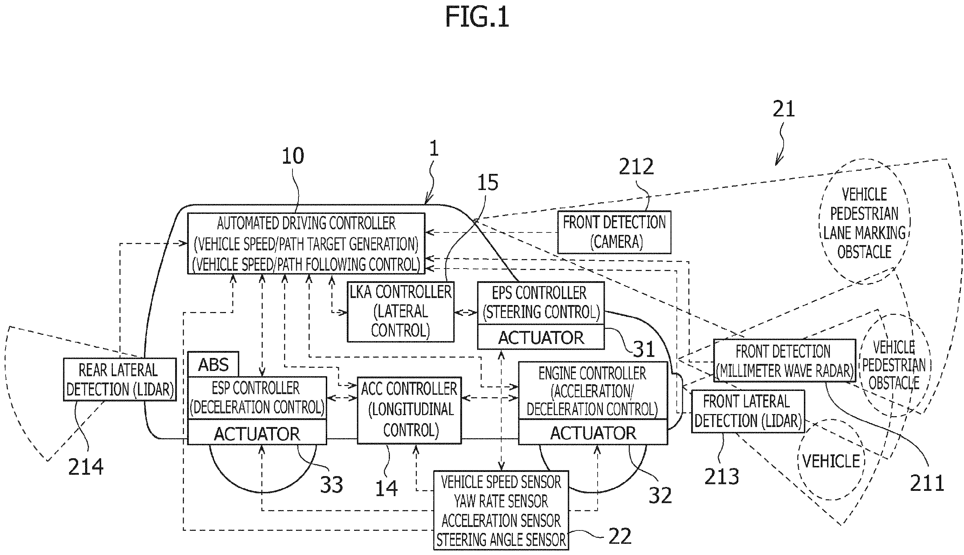

In Figure 1, a vehicle 1 equipped with a driving control system according to the present invention includes, in addition to common components, such as an engine and a vehicle body, of an automobile, an external sensor 21 for detecting a vehicle surrounding environment, an internal sensor 22 for detecting vehicle information, a controller/actuator group for speed control and steering control, an ACC controller 14 for inter-vehicle distance control, an LKA controller 15 for lane keeping control, and an automated driving controller 10 for controlling them to execute partially automated in-lane driving (PADS: Partially Automated in-lane Driving System), automated in-single lane driving (ALKS: Automated lane keeping system), and automated lane change (PALS: Partially Automated Lane change System) in order to perform, at the vehicle side, recognition, determination, and operation conventionally performed by a driver.

The controller/actuator group for speed control and steering control includes an EPS (Electric Power Steering) controller 31 for steering control, an engine controller 32 for acceleration/deceleration control, and an ESP/ABS controller 33. An ESP (registered trademark; Electronic Stability Program) includes an ABS (Antilock Brake System) to form a stability control system (vehicle behavior stabilization control system).

The external sensor 21 is composed of a plurality of detection means for inputting lane markings on a road defining the vehicle's own driving lane and neighboring lanes, and presence of and relative distance from other vehicles, obstacles, people, and the like around the vehicle into the automated driving controller 10 as external data such as image data or point cloud data.

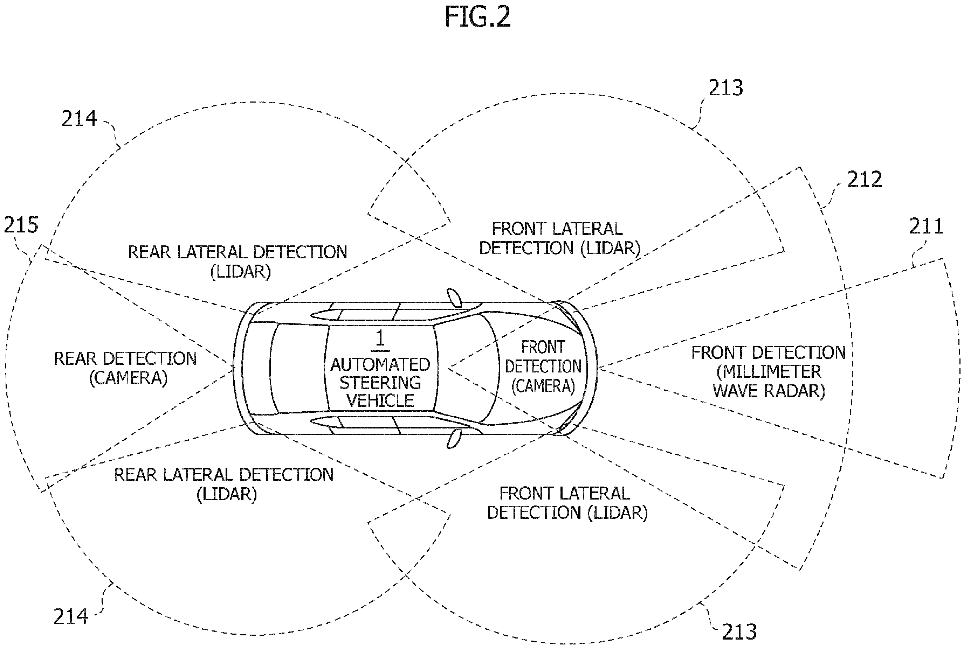

For example, as shown in Figure 2, the vehicle 1 includes a millimeter wave radar (211) and a camera (212) as front detection means 211 and 212, LIDARs (Laser Imaging Detection And Ranging) as front lateral detection means 213 and rear lateral detection means 214, and a camera (back camera) as rear detection means 215, covers 360 degrees around the vehicle, and can detect positions of and distance from vehicles, obstacles and the like, and lane marking positions of the vehicle's own driving lane and the neighboring lanes within a predetermined range in the front, rear, left, and right directions of the vehicle.

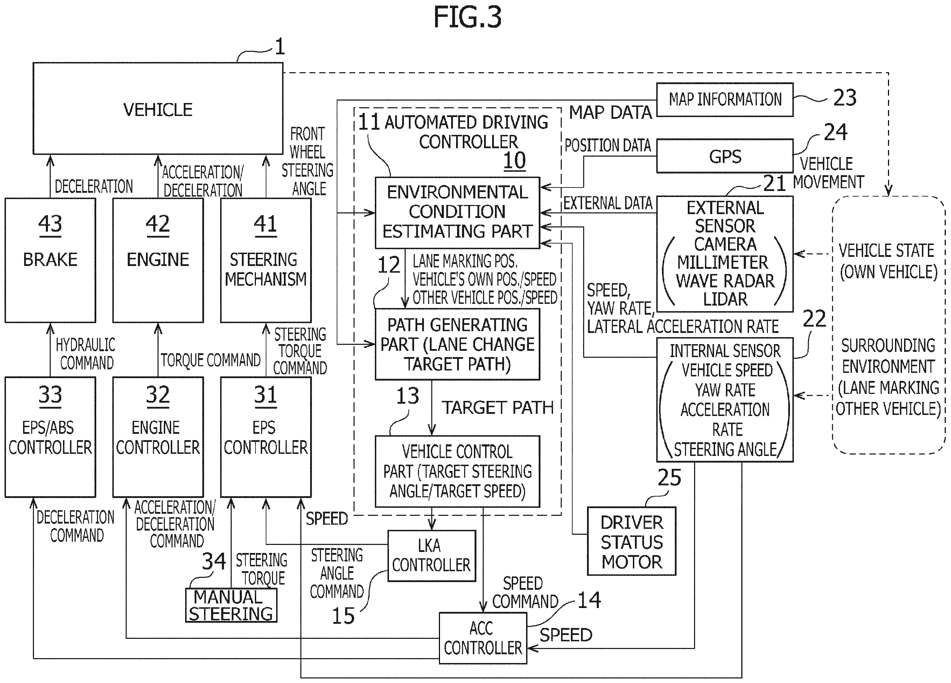

The internal sensor 22 is composed of a plurality of detection means, such as a vehicle speed sensor, a yaw rate sensor and an acceleration sensor, for measuring physical quantities representing the vehicle's moving state, and their measurement values are input into the automated driving controller 10, ACC controller 14, LKA controller 15, and EPS controller 31 as shown in Figure 3, and arithmetically processed together with the input from the external sensor 21.

The automated driving controller 10 includes an environmental condition estimating part 11, a path generating part 12 and a vehicle control part 13, and includes a computer for performing functions as described below, that is, a ROM storing programs and data, a CPU for performing arithmetic processing, a RAM for reading out the programs and data, and storing dynamic data and arithmetic processing results, an input/output interface, and the like.

The environmental condition estimating part 11 acquires the absolute position of the vehicle itself by matching the position information of the vehicle itself by positioning means 24 such as a GPS and map information 23, and on the basis of the external data such as the image data and point cloud data obtained by the external sensor 21, estimates positions of lane markings of the lane in which the vehicle is driving and the neighboring lanes, and positions and speeds of other vehicles. In addition, it acquires the moving state of the vehicle itself from internal data measured by the internal sensor 22. Furthermore, it acquires the driver's state by a driver status monitor 25.

The path generating part 12 generates a target path from the vehicle's own position estimated by the environmental condition estimating part 11 to an arrival target. In addition, the path generating part 12 generates a target path from the vehicle's position to an arrival target point in lane change on the basis of the positions of the lane markings of the neighboring lane, the positions and speeds of the other vehicles, and the vehicle's moving state estimated by the environmental condition estimating part 11.

The vehicle control part 13 calculates a target vehicle speed and a target steering angle on the basis of the target path generated by the path generating part 12, transmits a speed command for constant speed cruise or inter-vehicle distance keeping and following cruise to the ACC controller 14, and transmits a steering angle command for path following to the EPS controller 31 via the LKA controller 15.

The vehicle speed is also input into the EPS controller 31 and ACC controller 14. Because a steering reaction force changes according to the vehicle speed, the EPS controller 31 refers to a steering angle-steering torque map for each vehicle speed and transmits a torque command to a steering mechanism 41. The engine controller 32, ESP/ABS controller 33, and EPS controller 31 control an engine 42, a brake 43, and the steering mechanism 41, and thereby the movement of the vehicle 1 in a longitudinal direction and a lateral direction is controlled.

### (Outline of Partially Automated In-Lane Driving System)

Next, an outline of the partially automated in-lane driving system (PADS) will be described.

The partially automated in-lane driving system (PADS) is a system that combines the inter-vehicle distance control system (ACCS: Adaptive Cruise Control System) and the lane keeping assistance system (LKAS), and is enabled in a state in which both ACC controller 14 included in the inter-vehicle distance control system (ACCS) and LKA controller 15 included in the lane keeping assistance system (LKAS) are operating together with the automated driving controller 10.

At the same time as operation of the partially automated in-lane driving system, the automated driving controller 10 (path generating part 12) generates a target path in a single lane and a target vehicle speed on the basis of the external information (lanes, vehicle's own position, and positions and speeds of other vehicles driving in the own driving lane and the neighboring lane) obtained by the environmental condition estimating part 11 through the external sensor 21, and the internal information (vehicle speed, yaw rate, and acceleration) obtained by the internal sensor 22.

The automated driving controller 10 (vehicle control part 13) estimates the speed, attitude, and lateral displacement of the vehicle after Δt seconds from a relationship between a yaw rate γ and lateral acceleration rate (d²y/dt²) occurring due to vehicle movement, by the vehicle's own position and motion characteristics of the vehicle itself, that is, by a front wheel steering angle δ occurring when a steering torque T is applied to the steering mechanism 41 during traveling at a vehicle speed V, gives a steering angle command that makes the lateral displacement to yt after Δt seconds to the EPS controller 31 via the LKA controller 15, and gives a speed command that makes the speed to Vt after Δt seconds to the ACC controller 14.

Although the ACC controller 14, LKA controller 15, EPS controller 31, engine controller 32, and ESP/ABS controller 33 operate independently of automatic steering, they are also operable according to command input from the automated driving controller 10 while a partially automated in-lane driving function (PADS) and a partially automated lane change system (PALS) are operating.

The ESP/ABS controller 33 that has received a deceleration command from the ACC controller 14 issues a hydraulic command to an actuator and controls braking force of the brake 43 to control the vehicle speed. In addition, the engine controller 32 that has received an acceleration/deceleration command from the ACC controller 14 controls an actuator output (degree of throttle opening) to give the engine 42 a torque command and controls driving force to control the vehicle speed.

The ACC function (ACCS) functions with combination of hardware and software, such as the millimeter wave radar as the front detection means 211 included in the external sensor 21, ACC controller 14, engine controller 32, and ESP/ABS controller 33.

That is, in a case in which there is no vehicle ahead, the ACC function performs constant speed cruise by setting an ACC set speed (set speed) as the target vehicle speed; and in a case of having caught up with the vehicle ahead (in a case in which a speed of the vehicle ahead is equal to or slower than the ACC set speed), the ACC function performs following cruise to the vehicle ahead while maintaining an inter-vehicle distance (set inter-vehicle distance) corresponding to a time gap (inter-vehicle time = inter-vehicle distance / speed of vehicle) set in accordance with the speed of the vehicle ahead.

The LKA function (LKAS) detects the lane markings and the vehicle's position by the environmental condition estimating part 11 of the automated driving controller 10 on the basis of image data obtained by the external sensor 21 (cameras 212 and 215), and performs steering control by the EPS controller 31 via the LKA controller 15 so as to be able to drive at a lane center.

That is, the EPS controller 31 that has received the steering angle command from the LKA controller 15 refers to a vehicle speed-steering angle-steering torque map, issues a torque command to an actuator (EPS motor), and gives a front wheel steering angle targeted by the steering mechanism 41.

The partially automated in-lane driving system (PADS) is implemented by combining longitudinal control (speed control and inter-vehicle distance control) by the ACC controller 14 and lateral control (steering control and lane keeping driving control) by the LKA controller 15 as described above.

### (System State Monitoring)

During operation of the partially automated in-lane driving system (PADS), the environmental condition estimating part 11 constantly monitors whether the driving state and surrounding environmental condition of the vehicle and the driver's state are maintained within an operational design domain (ODD) on the basis of the external information obtained through the external sensor 21, the vehicle information obtained by the internal sensor 22, the driver's state obtained by the driver status monitor 25, and the like.

When the environmental condition estimating part 11 determines that automated driving cannot be continued stably, such as when a system operating condition is determined to be deviated, or when a system abnormality or failure is detected, the driver is notified of an operation takeover request (TD: transition demand).

When the driver takes over driving operation within a predetermined time (for example, ten seconds) from the operation takeover request (TD), the operation shifts from the partially automated in-lane driving to manual driving. The driver's operation takeover is detected by a steering torque sensor or a steering wheel grip sensor. On the other hand, when the driving operation is not taken over within the predetermined time, a minimal risk maneuver (MRM) is activated and minimal risk maneuver is performed.

### (Minimal Risk Maneuver When Operation Takeover is not Performed)

The minimal risk maneuver (MRM) refers to a function for automatic shifting to a minimal risk condition when the driver cannot take over the operation, although a change in the external driving environment or a failure or the like in the system has occurred and the driver is notified of the operation takeover request (TD), and specifically, includes control (safe stop) of evacuating to the road shoulder or decelerating and stopping in the lane by automatic steering by the automated driving controller 10.

As described above, the external sensor 21 is composed of the plurality of sensors, and the automated driving controller 10 is redundantly designed so that the minimal risk maneuver (MRM) can be executed by other sensors or detection means when an abnormality occurs in any sensor or detection means.

### (Emergency Maneuver When Collision is Predicted)

When a collision with another vehicle is predicted for some reason while the partially automated in-lane driving system (PADS) is operating, emergency maneuver (EM) is activated and emergency avoidance control is performed. The emergency maneuver (EM) includes activation of the autonomous emergency braking (AEB) for collision avoidance or collision damage mitigation.

That is, the environmental condition estimating part 11 constantly calculates a predicted collision time (TTC) on the basis of information (inter-vehicle distance and relative speed) of a vehicle ahead (or obstacle) detected by the external sensor 21 and the vehicle speed of the vehicle itself acquired by the internal sensor 22, and when it is determined that there is a high probability of collision, such as when the predicted collision time is equal to or less than a predetermined value, issues a brake request (hydraulic command) to an actuator of the brake 43 and executes autonomous braking (autonomous emergency braking).

### (Outline of Partially Automated Lane Change System)

Next, an outline of the partially automated lane change system (PALS) will be described on the assumption of lane change from a state of partially automated in-lane driving (PADS driving) on a highway with two or more lanes on one side with a median strip.

The partially automated lane change system (PALS) automatic performs lane change by determination of the system itself or the driver's instructions or approval, and is implemented by combining longitudinal control (speed control and inter-vehicle distance control) and lateral control (target path following control by automatic steering) by the automated driving controller 10.

At the same time as operation of the partially automated lane change system, the automated driving controller 10 (path generating part 12) constantly generates a target path for changing lanes from a currently driving lane to a neighboring lane on the basis of the external information (lane markings of the vehicle's driving lane and the neighboring lane, and positions and speeds of other vehicles driving in the vehicle's driving lane and the neighboring lane) obtained by the environmental condition estimating part 11 through the external sensor 21, and the internal information (vehicle speed, yaw rate, and acceleration rate) obtained by the internal sensor 22.

The automated lane change target path is a path that leads to a state of driving at the center of the neighboring lane by performing lane change from the currently driving lane; regarding other vehicles driving in the neighboring lane, their future positions and speeds are predicted, and automated lane change by automatic steering is executed by determination of the system under circumstances where it is determined that there is no other vehicle in a front predetermined area, a rear predetermined area, and a lateral predetermined area of the neighboring lane set according to the speed of the vehicle.

Also during automated lane change, the monitoring around the vehicle is continued by the external information obtained by the environmental condition estimating part 11 through the external sensor 21, and when intrusion (cut in) of another vehicle into the front predetermined area, rear predetermined area, or lateral predetermined area is confirmed, the automated driving controller 10 determines whether to continue or cancel the lane change based on the position of the vehicle during the lane change.

When it is determined that the lane change cannot be continued and the lane change is cancelled, the automated driving controller 10 (path generating part 12) changes the target to be followed to the center line of the lane (original lane) in which the vehicle was driving before the start of the lane change, and regenerates a target path and a vehicle speed; the vehicle control part 13 gives a steering command to the EPS controller 31, and a speed command to the ACC controller 14 in order to cause the vehicle to follow the regenerated target path; and the vehicle returns to the original lane by automatic steering (automated lane return function).

Even when intrusion (cut in) of another vehicle into the front predetermined area, rear predetermined area, or lateral predetermined area is confirmed, when the vehicle has almost moved to the neighboring lane, for example, when three or more of four wheels cross the lane marking and enter the neighboring lane, the lane change is not cancelled and the lane change is continued.

When it is determined that the lane change is difficult to continue, the driver is notified of the operation takeover request (TD), the automated lane change is cancelled and authority is transferred to the driver. When the driver takes over, the operation shifts to manual driving, whereas when the driver cannot take over, the minimal risk maneuver (MRM) is activated.

### (Outline of Partially Automated In-Lane Driving System)

Next, an outline of the automated lane keeping system (ALKS) will be described assuming a state of partially automated in-lane driving (PADS driving) on a highway with a median strip.

The automated lane keeping system (ALKS) is a system combining the inter-vehicle distance control system (ACCS) and the lane keeping assistance system (LKAS) in the same way as the partially automated in-lane driving system (PADS), and is executed in a state in which both ACC controller 14 included in the inter-vehicle distance control system (ACCS) and the LKA controller 15 included in the lane keeping assistance system (LKAS) are operating together with the automated driving controller 10, but can only be executed in a speed range of 60 km/h or less.

The automated lane change function is stopped during operation of the automated lane keeping system (ALKS), and automated driving is executed while maintaining a single lane. In addition to the above, the automated lane keeping system (ALKS) can be executed when the driver status monitor 25 confirms that the driver has responded to the takeover request and can take over driving; as long as the driver is seated in the driver's seat and the seatbelt is fastened, the driver is not required to monitor the driving situation.

Since the minimum speed is set at 50 km/h on the highway, shift from the partially automated in-lane driving (PADS driving) to the automated lane keeping system (ALKS) is performed when the vehicle speed falls to 50 km/h or less due to congestion on the highway substantially in a state of following cruise to the vehicle ahead by partially automated in-lane driving (PADS driving) or when, e.g., the vehicle catches up to the vehicle ahead that is driving at 50 km/h or less due to congestion.

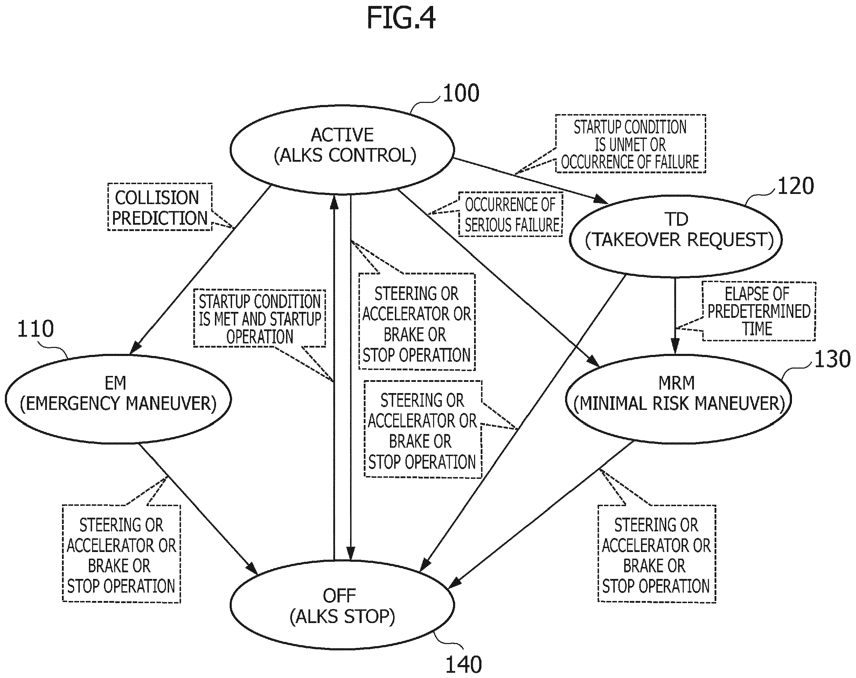

Figure 4 shows state transition of control in the automated lane keeping system (ALKS). Even during the operation of the automated lane keeping system (ALKS), the environmental condition estimating part 11 constantly monitors the driving state and surrounding environmental condition of the vehicle, and the driver's state; when the environmental condition estimating part 11 determines that a system activation condition is not met, or detects a system failure (excluding serious failures described later), the system notifies the driver of the operation takeover request (TD), and shifts from the automated lane keeping driving to the manual driving when the driver takes over the driving operation within the predetermined time (for example, ten seconds).

When the driving operation takeover is not performed within the predetermined time, the minimal risk maneuver (MRM) is activated, and the risk minimization control is performed. Note that when the environmental condition estimating part 11 determines that a serious failure has occurred in the system (such as engine hydraulic pressure reduction, engine water temperature rise, or brake system abnormality that may cause an accident, a fire, or the like) during the operation of the automated lane keeping system (ALKS), the operation takeover request (TD) is not made, the minimal risk maneuver (MRM) is immediately activated, and the risk minimization control is performed.

During the operation of the automated lane keeping system (ALKS), when a collision is predicted for some reason, such as cut in of another vehicle, the emergency maneuver (EM) is activated, and autonomous emergency braking (AEB) is performed as the emergency avoidance control.

### (Override Function)

The automated driving system as described above enables override by the driver's operation intervention during operation of the partially automated in-lane driving system (PADS), partially automated lane change system (PALS), or automated lane keeping system (ALKS) or operation of the minimal risk maneuver (MRM) or emergency maneuver (EM).

That is, the longitudinal control system (ACCS) is overridden when an engine torque request by the driver's accelerator pedal operation or a deceleration request by a brake pedal operation is equal to or greater than respective override threshold values. Each of the override threshold values is set to an amount of accelerator operation (engine torque command value) or an amount of brake operation (EPS hydraulic command value) by which the driver is determined to have intentionally performed an acceleration/deceleration operation, and both are set according to acceleration/deceleration characteristics of the vehicle and the driving state.

The lateral control system (LKAS) is overridden when a steering torque by the driver's manual steering 34 is equal to or greater than an override threshold value. The override threshold value by the steering intervention is set according to the steering characteristics of the vehicle and the driving state.

When the override (operation override) by the acceleration/deceleration operation intervention or the override (steering override) by the steering intervention is performed, each automated driving function described above is stopped and the operation shifts to the driver's manual driving.

As described above, since the driver is not required to watch the driving situation and is freed from basic driving tasks during the operation of the automated lane keeping system (ALKS), when the minimal risk maneuver (MRM) or emergency maneuver (EM) is activated in such a situation, there is a risk of the behavior of the vehicle becoming unstable or suddenly approaching other vehicles and surrounding structures due to excessive override of the driver who is agitated by emergency evacuation or sudden deceleration.

### (Over-Operation Prevention Function in Automated lane keeping system)

The automated driving controller 10 according to the present invention has an over-operation prevention function for changing an operation override threshold value and a steering override threshold value to values greater than those during the normal time when shift to the minimal risk maneuver (MRM) or emergency maneuver (EM) is performed during the operation of the automated lane keeping system (ALKS).

By increasing the operation override threshold value and steering override threshold value at the time of shift to the minimal risk maneuver (MRM) or emergency maneuver (EM), even if a large amount of operation that would make the behavior of the vehicle unstable before the threshold value change is given by an excessive accelerator/brake operation intervention or steering intervention by the driver who is agitated by activation of each control, the minimal risk maneuver (MRM) or emergency maneuver (EM) is continued by the automated driving controller 10, and a situation of the behavior of the vehicle becoming unstable or suddenly approaching other vehicles or surrounding structures can be avoided.

### 1. Operation Override Threshold Value

Hereinafter, first, the over-operation prevention function by changing the operation override threshold value will be described. An over-steering prevention function by changing the steering override threshold value will be described later.

### (Accelerator Override Threshold Value during Normal Time)

When an engine torque command value due to the driver's accelerator depression is greater than an engine torque command value for maintaining preceding vehicle following cruise, accelerator override occurs, and the driver's accelerator operation is prioritized. About the threshold value, an engine torque command value obtained from an engine-torque map set according to a vehicle speed and a gear stage is determined to be an accelerator override threshold value Td.

### (Brake Override Threshold Value during Normal Time)

When an ESP hydraulic command that causes deceleration with respect to a preceding vehicle following speed is given by the driver's brake depression, brake override occurs, and the driver's brake operation is prioritized. An ESP hydraulic command value that causes deceleration corresponding to, for example, speed 2 km/h with respect to the preceding vehicle following speed or an ESP hydraulic pressure value that causes deceleration corresponding to 0.2 m/s² with respect to ACC setting acceleration is determined to be a brake override threshold value Pd.

### (Accelerator Override Threshold Values at MRM Activation and at EM Activation)

An engine torque command value selected from values greater than the accelerator override threshold value Td during normal time, and preferably, a range of 120%-250% of the accelerator override threshold value during normal time, and more preferably, a range of 150%-220% is set as an accelerator override threshold value Tm at MRM activation, and an accelerator override threshold value Te at EM activation is set to a value even greater than the accelerator override threshold value Tm at the MRM activation.

### (Brake Override Threshold Values at MRM Activation and at EM Activation)

An ESP hydraulic command value selected from values greater than the brake override threshold value during normal time, and preferably, a range of 120%-250% of the brake override threshold value during normal time, and more preferably, a range of 150%-220% is set as a brake override threshold value Pm at the MRM activation, and a brake override threshold value Pe at the EM activation is set to a value even larger than the brake override threshold value Pm at the MRM activation.

### 2. Steering Override Threshold Value

Next, the over-steering prevention function by changing the steering override threshold value will be described.

### (Steering Override Threshold Value during Normal Time)

Regarding an additive steering override threshold value during normal time, a steering torque (steering torque calculated from a vehicle speed-steering angle-steering torque map) corresponding to a steering angle at which a virtual lateral displacement y't for reaching a virtual lateral position after t seconds becomes yt+α (where α is a constant determined based on the vehicle speed) is set as a steering override threshold value Sd.

In the case of subtractive steering, a value that can be determined not to be minute (determined by the steering angle, steering angular velocity, or the like) and is applied in a direction of reducing the steering torque to a value (steering torque target value) obtained by converting a steering angle at which a virtual lateral displacement yt for reaching the virtual lateral position after t seconds becomes yt+α (where α is a constant determined based on the vehicle speed) into the steering torque is set as the steering override threshold value Sd.

### (Steering Override Threshold Values at MRM Activation and at EM Activation)

An additive steering override threshold value is set to a value obtained by converting, into a steering torque, a steering angle calculated from a virtual lateral displacement y"t (=yt+β, where β > α) and motion characteristics of the vehicle with respect to the virtual lateral displacement yt during normal time; a steering override threshold value Se at the EM activation is set to a value even greater than a steering override threshold value Sm at the MRM activation.

A subtractive steering override threshold value is set to a value obtained by converting, into a steering torque, a steering angle calculated from a virtual lateral displacement y"t (=yt-y, where γ is larger than a lateral displacement corresponding to a steering torque X'Nm) and motion characteristics of the vehicle with respect to the virtual lateral displacement yt during normal time; the steering override threshold value Se at the EM activation is set to a value even greater than the steering override threshold value Sm at the MRM activation.

### (Control Flow during Operation of Automated lane keeping system)

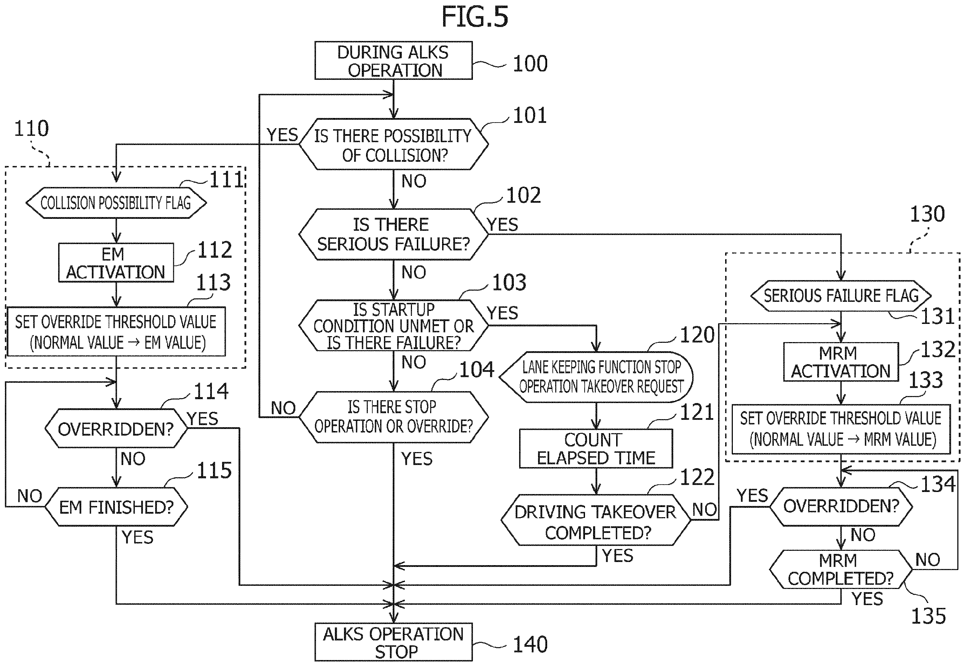

Next, a control flow (Figure 5) during the operation of the automated lane keeping system will be described.

### (1) Activation of Automated lane keeping system (ALKS)

When the vehicle speed falls to 60 km/h or less in a state of following cruise to a vehicle ahead by the partially automated in-lane driving (PADS driving) and an activation condition is met, the operation shifts to the automated lane keeping system (ALKS) (step 100).

### (2) Collision Determination

During the operation of the automated lane keeping system (ALKS) also, a collision determination is constantly made (step 101); when it is determined that there is a possibility of collision due to sudden cut in or the like by another vehicle, a collision determination flag is set (step 111), and the operation shifts to emergency maneuver (EM) (step 110).

### (3) Emergency Maneuver

When shifting to the emergency maneuver (EM), at the same time as the collision determination flag (step 111), the autonomous emergency braking (AEB) is activated as the emergency avoidance control (step 112); at the same time, as the steering override threshold value and operation override threshold value, the steering override threshold value Se, accelerator override threshold value Te, and brake override threshold value Pe at the EM activation (Se>Sd, Te>Td, and Pe>Pd) are set (step 113).

### (4) Determination of Whether Override has Made during EM Operation

The determination of whether override has made continues during the operation of the emergency avoidance control (automated emergency braking) also (step 114); when a steering intervention equal to or greater than the steering override threshold value Se, an accelerator operation intervention equal to or greater than the accelerator override threshold value Te, or a brake operation intervention equal to or greater than the brake override threshold value Pe is detected, the automated lane keeping system (ALKS) stops, and the operation shifts to manual driving (step 140).

### (5) Emergency Maneuver Completion Determination

A determination of whether the emergency maneuver (EM) is finished or not is made on the basis of the vehicle state and the surrounding environment (step 115). That is, when there is no longer a risk of an imminent collision (due to emergency stop or a change in the surrounding environment), or the system is made inactive by the driver, the emergency maneuver is determined to be completed, the steering override threshold value and operation override threshold value are reset to the threshold values (Sd, Td, and Pd) during normal time, and hazard lamps blink (step 140).

### (6) Serious Failure Determination

When it is determined that there is no collision possibility in collision determination step 101, a self-diagnosis function of the vehicle determines whether a serious failure has occurred (step 102); when it is determined that a serious failure has occurred, a serious failure flag is set (step 131), and the operation shifts to the minimal risk maneuver (MRM) (130). When it is determined that there is no serious failure, it is determined whether the system startup condition is not met or failure has occurred or not (step 103).

### (7) System Startup Condition being Unmet or Failure Determination

The environmental condition estimating part 11 determines whether the driving state and surrounding environment condition of the vehicle are maintained within the operational design domain (ODD) of the system, the driver status monitor 25 determines whether the driver is in a state of being able to take over driving, and the self-diagnosis function of the vehicle determines whether other failures have occurred; when ODD deviation, driver abnormalities (drowsiness, poor physical condition, or the like), or other failures or abnormalities are detected, stop advance notice of the automated lane keeping system (ALKS) and the operation takeover request (TD) are made (step 120), and counting of the predetermined time (for example, ten seconds) starts (step 121).

### (8) Driving Takeover Determination

In step 122, when the driving operation takeover is confirmed by detection of the steering torque or the like within the predetermined time (for example, ten seconds), the automated lane keeping system (ALKS) stops and the operation shifts to manual driving (step 140). On the other hand, when the driving operation takeover is not confirmed within the predetermined time, the operation shifts to the minimal risk maneuver (MRM) (130).

### (9) Minimal Risk Maneuver

When the operation shifts to the minimal risk maneuver (MRM), the minimal risk maneuver (MRM) is activated (step 132). At the same time, as the steering override threshold value and operation override threshold value, the steering override threshold value Sm, accelerator override threshold value Tm, and brake override threshold value Pm at the MRM activation (Sm>Sd, Tm>Td, and Pm>Pd) are set (step 113).

When the minimal risk maneuver (MRM) is activated, the hazard lamps blink, and the automated driving controller 10 performs control to decelerate and stop at predetermined deceleration while keeping the currently driving lane.

### (10) Determination of Whether Override has Made during MRM Operation

The determination of whether override has made continues during operation of the minimal risk maneuver (MRM) also (step 134); when a steering intervention equal to or greater than the steering override threshold value Sm, an accelerator operation intervention equal to or greater than the accelerator override threshold value Tm, or a brake operation intervention equal to or greater than the brake override threshold value Pm is detected (or the system is stopped by the driver's switch operation), the automated lane keeping system (ALKS) stops, and the operation shifts to manual driving (step 140).

### (11) Minimal Risk Maneuver Completion Determination

A determination of whether the minimal risk maneuver (MRM) is completed is made on the basis of the vehicle state (step 135). That is, when the system is made inactive or the system stops the vehicle, the risk minimization control is determined to be completed; the steering override threshold value and operation override threshold value are reset to the threshold values (Sd, Td, and Pd) during normal time, and the automated lane keeping system (ALKS) stops (step 140). Hazard lamps keep blinking unless they are unlit by manual operation.

### (Operation and Effects)

As detailed above, in the driving control apparatus for a vehicle according to the present invention, since the steering override threshold value and accelerator/brake operation override threshold values are set according to the operation state of the automated lane keeping system (ALKS), even when a large amount of operation that would make the behavior of the vehicle unstable if the threshold values were the threshold values during normal time is given by an excessive steering intervention or accelerator/brake operation intervention by the driver who is agitated by activation of the emergency maneuver (EM) or minimal risk maneuver (MRM), the emergency maneuver (EM) or minimal risk maneuver (MRM) is continued by the automated driving controller 10, and a situation of the behavior of the vehicle becoming unstable or suddenly approaching other vehicles or surrounding structures can be avoided.

Since the steering override threshold values (Sd<Sm<Se) and accelerator/brake override threshold values (Td<Tm<Te and Pd<Pm<Pe) are set according to urgency of control, an opportunity for the operation intervention as needed is not lost.

### (Other Embodiments)

Although in the above embodiment, the state transition of control during the operation of the automated lane keeping system (ALKS) is mainly described, the steering override threshold value and accelerator/brake operation override threshold values are set in the same manner when the emergency maneuver (EM) or minimal risk maneuver (MRM) is activated during the operation of the partially automated in-lane driving system (PADS) or partially automated lane change system (PALS), and the over-operation prevention control is performed.

Although in the above embodiment, the case in which the override threshold values set when the emergency maneuver (EM) is activated are greater than the override threshold values set when the minimal risk maneuver (MRM) is activated (Sm<Se, Tm<Te, Pm<Pe) is described, they may be set to the same values.

Although some embodiments of the present invention have been described above, the present invention is not limited to the above embodiments, and various modifications and changes are possible within the scope of the present claims.

### [Reference Signs List]

10 Automated driving controller
11 Environmental condition estimating part
12 Path generating part
13 Vehicle control part
14 ACC controller
15 LKA controller
21 External sensor
22 Internal sensor
31 EPS controller
32 Engine controller
33 ESP/ABS controller
34 Manual steering (steering wheel)

## Claims

1. A driving control apparatus (10) for a vehicle, comprising:
an environmental condition estimating part (11) including a surrounding recognition function for recognizing a lane in which a vehicle is driving, neighboring lanes, other vehicles driving in the driving lanes, and surrounding environments and a function for obtaining a moving state of the vehicle;
a path generating part (12) for generating a target path on the basis of information obtained by the environmental condition estimating part (11); and
a vehicle control part (13) configured to perform speed control and steering control for making the vehicle follow the target path, the driving control apparatus (10) for a vehicle being **characterized by** having:
a function for performing automated in-lane driving by maintaining a set vehicle speed when there is no preceding other vehicle in the driving lane of the vehicle, and maintaining a set inter-vehicle distance when there is a preceding other vehicle;
a function for performing automated lane change to a neighboring lane when there is no other vehicle in a predetermined area of the neighboring lane;
an minimal risk maneuver MRM function for performing minimal risk maneuver including evacuating the vehicle to a road shoulder or stopping the vehicle in the lane when a system failure occurs during operation of the automated in-lane driving function or the automated lane change function or operation is not taken over by a driver when a system failure occurs;
an emergency maneuver EM function for performing emergency maneuver including operation of an emergency brake when a collision with another vehicle is predicted due to intrusion of the other vehicle into the target path; and
an override function for stopping an operating function and transferring authority to the driver when there is an operation intervention equal to or greater than a predetermined threshold value by the driver during operation of the automated in-lane driving function, the automated lane change function, the MRM function, or the EM function,
wherein as the predetermined threshold value, the override function is configured to be set to a first threshold value during operation of the automated in-lane driving function or the automated lane change function, to a second threshold value at activation of the MRM function, and to a third threshold value at activation of the EM function, wherein the third threshold value is equal to or greater than the second threshold value, and the second threshold value is greater than the first threshold value.

## Patentansprüche

1. Eine Fahrsteuervorrichtung (10) für ein Fahrzeug, aufweisend:
einen Umgebungsbedingungsschätzteil (11), der eine Umgebungserkennungsfunktion zum Erkennen einer Fahrspur, auf der ein Fahrzeug fährt, benachbarter Fahrspuren, anderer Fahrzeuge, die auf den Fahrspuren fahren, und umgebender Umgebungen und eine Funktion zum Erhalten eines Bewegungszustands des Fahrzeugs umfasst;
einen Pfaderzeugungsteil (12) zum Erzeugen eines Zielpfades basierend auf Informationen, die durch den Umgebungsbedingungsschätzteil (11) erhalten werden; und
einen Fahrzeugsteuerteil (13), der konfiguriert ist, um eine Geschwindigkeitssteuerung und eine Lenksteuerung durchzuführen, um das Fahrzeug zu veranlassen, dem Zielpfad zu folgen, wobei die Fahrsteuervorrichtung (10) für ein Fahrzeug **dadurch gekennzeichnet ist, dass** sie Folgendes aufweist:
eine Funktion zum Durchführen von automatisiertem Fahren auf der Fahrspur durch Aufrechterhalten einer eingestellten Fahrzeuggeschwindigkeit, wenn sich kein vorausfahrendes anderes Fahrzeug in der Fahrspur des Fahrzeugs befindet, und Aufrechterhalten eines eingestellten Abstands zwischen den Fahrzeugen, wenn ein vorausfahrendes anderes Fahrzeug vorliegt;
eine Funktion zum Durchführen eines automatischen Fahrspurwechsels zu einer benachbarten Fahrspur, wenn sich kein anderes Fahrzeug in einem vorbestimmten Bereich der benachbarten Fahrspur befindet;
eine Manöver mit minimalem Risiko MRM-Funktion zum Durchführen eines Manövers mit minimalem Risiko, einschließlich eines Ausweichens des Fahrzeugs auf einen Fahrbahnrand oder eines Anhaltens des Fahrzeugs in der Fahrspur, wenn ein Systemfehler während eines Betriebs der automatischen Fahrfunktion auf der Fahrspur oder der automatischen Fahrspurwechselfunktion auftritt oder ein Betrieb nicht von einem Fahrer übernommen wird, wenn ein Systemfehler auftritt;
eine Notfallmanöver EM-Funktion zum Durchführen eines Notfallmanövers einschließlich eines Betriebs einer Notbremse, wenn eine Kollision mit einem anderen Fahrzeug aufgrund eines Eindringens des anderen Fahrzeugs in den Zielpfad vorhergesagt wird; und
eine Übersteuerungsfunktion zum Stoppen einer Betriebsfunktion und zum Übertragen von Befugnissen auf den Fahrer, wenn eine Betriebsintervention vorliegt, die gleich oder größer als ein vorbestimmter Schwellenwert ist, durch den Fahrer während eines Betriebs der automatisierten Fahrfunktion auf der Fahrspur, der automatisierten Fahrspurwechselfunktion, der MRM-Funktion oder der EM-Funktion,
wobei als der vorbestimmte Schwellenwert die Übersteuerungsfunktion konfiguriert ist, um während eines Betriebs der automatisierten Fahrfunktion auf der Fahrspur oder der automatisierten Fahrspurwechselfunktion auf einen ersten Schwellenwert, bei Aktivierung der MRM-Funktion auf einen zweiten Schwellenwert und bei Aktivierung der EM-Funktion auf einen dritten Schwellenwert eingestellt wird, wobei der dritte Schwellenwert gleich oder größer als der zweite Schwellenwert ist und der zweite Schwellenwert größer als der erste Schwellenwert ist.

## Revendications

1. Appareil de commande de conduite (10) pour un véhicule, comprenant :
une partie d'estimation de conditions environnementales (11) comportant une fonction de reconnaissance d'environnement pour reconnaître une voie sur laquelle un véhicule circule, des voies voisines, d'autres véhicules circulant sur les voies de circulation, et des milieux environnants et une fonction pour obtenir un état de déplacement du véhicule ;
une partie de génération de trajectoire (12) pour générer une trajectoire cible sur la base d'informations obtenues par la partie d'estimation de conditions environnementales (11) ; et
une partie de commande de véhicule (13) configurée pour réaliser une commande de vitesse et une commande de direction pour amener le véhicule à suivre la trajectoire cible, l'appareil de commande de conduite (10) pour un véhicule étant **caractérisé en ce qu'**il possède :
une fonction pour réaliser une conduite sur la voie automatisée par maintien d'une vitesse de véhicule réglée en l'absence d'un autre véhicule précédant le véhicule sur la voie de circulation de celui-ci, et par maintien d'une distance entre véhicules réglée en la présence d'un autre véhicule précédant le véhicule ;
une fonction pour réaliser un changement de voie automatisé vers une voie voisine en l'absence d'un autre véhicule dans une zone prédéterminée de la voie voisine ;
une fonction de manoeuvre à risque minimal MRM pour réaliser une manoeuvre à risque minimal comprenant l'évacuation du véhicule vers un accotement routier ou l'arrêt du véhicule sur la voie lorsqu'une défaillance de système se produit lors de l'utilisation de la fonction de conduite sur la voie automatisée ou de la fonction de changement de voie automatisé ou lorsque la conduite n'est pas reprise par un conducteur lorsqu'une défaillance de système se produit ;
une fonction de manoeuvre d'urgence EM pour réaliser une manoeuvre d'urgence comprenant l'utilisation d'un frein d'urgence lorsqu'une collision avec un autre véhicule est prédite en raison de l'intrusion de l'autre véhicule dans la trajectoire cible ; et
une fonction prioritaire pour interrompre une fonction en cours d'utilisation et transférer l'autorité au conducteur en cas d'intervention d'utilisation égale ou
supérieure à une valeur seuil prédéterminée par le conducteur lors de l'utilisation de la fonction de conduite sur la voie automatisée, de la fonction de changement de voie automatisé, de la fonction MRM, ou de la fonction EM,
dans lequel en tant que valeur seuil prédéterminée, la fonction prioritaire est configurée pour être réglée sur une première valeur seuil lors de l'utilisation de la fonction de conduite sur la voie automatisée ou de la fonction de changement de voie automatisé, sur une deuxième valeur seuil lors de l'activation de la fonction MRM, et sur une troisième valeur seuil lors de l'activation de la fonction EM, dans lequel la troisième valeur seuil est égale ou supérieure à la deuxième valeur seuil, et la deuxième valeur seuil est supérieure à la première valeur seuil.
